## Europäisches Patentamt

## European Patent Office

## Office européen des brevets

(19)

(11) Numéro de publication: **0 241 394 B1**

(12)

# FASCICULE DE BREVET EUROPEEN

(45) Date de publication du fascicule du brevet:
21.02.90

(51) Int. Cl.⁵: **G 09 B 7/06**

(21) Numéro de dépôt: **87420094.2**

(22) Date de dépôt: **07.04.87**

(54) Dispositif détecteur autonome pour vérifier des informations portées sur un support.

(30) Priorité: **10.04.86 FR 8605321**

(43) Date de publication de la demande:
**14.10.87 Bulletin 87/42**

(45) Mention de la délivrance du brevet:
**21.02.90 Bulletin 90/8**

(84) Etats contractants désignés:
**AT BE CH DE ES FR GB GR IT LI LU NL SE**

(56) Documents cités:
**WO-A-83/02842**
**FR-A- 2 116 165**
**US-A- 4 004 843**

**R.C.A. TECHNICAL NOTES, no. 1315, octobre 1982, pages 1-4, RCA, Princeton, New Jersey, US; R.L. SCHELHORN: "Test fixture for testing chip carrier devices assembled in larger circuits"**

(73) Titulaire: **INFO-MEDIA COMMUNICATION, 5, rue Git le Coeur, F-75006 Paris (FR)**

(72) Inventeur: **Schott, Michel, rue de la Forêt, F-67550 Vendenheim (FR)**
Inventeur: **Reibel, Jean-Michel, 198, route d'Oberhausbergen, F-67200 Strasbourg (FR)**

(74) Mandataire: **Laurent, Michel et al, Cabinet LAURENT et GUERRE B.P. 32, F-69131 Ecully Cedex (FR)**

## Description

L'invention concerne un dispositif détecteur autonome pour vérifier des informations portées sur un support.

Dans le brevet français FR-A-2 116 165, correspondant au brevet américain 3 818 610, on a décrit un système pédagogique constitué en deux parties, à savoir respectivement:

— d'un support (papier) comportant une série d'informations identifiées par des repères conducteurs ou isolants ayant le même aspect visuel;

— d'autre part, par un détecteur autonome électrique, destiné à venir au contact de ces repères, associé à un circuit électrique qui émet un signal visuel ou sonore lorsque le contact électrique est établi.

Ce système présente toutefois l'inconvénient d'être limité seulement à la détection des bonnes réponses, de nécessiter une pression notable de la tête de lecture sur les repères du support, à défaut de quoi la détection risque d'être perturbée, et enfin d'exiger des contacts électriques de bonne qualité pour permettre le passage d'un courant appréciable afin de pouvoir émettre le signal désiré. De la sorte, ce système ne s'est guère développé malgré tout un intérêt ludique et/ou pédagogique.

L'invention pallie ces inconvénients. Elle vise un système du type en question avec support et détecteur autonome, dans lequel le détecteur soit facile à fabriquer fiable et résistant, et permette de détecter non seulement les bonnes réponses, mais également les réponses éronnées et enfin, ne nécessite pas de contacts électriques de très bonne qualité.

Ce dispositif détecteur autonome, destiné à coopérer avec des zones conductrices de résistivités différentes d'un support, du type comprenant:

— un corps allongé,

— une tête de lecture dépassant de ce corps,

— un circuit associé à la tête de lecture, apte à émettre un signal en fonction de la résistance électrique de la zone sur laquelle est appliquée la tête de lecture,

une source d'alimentation électrique, se caractérise en ce que le circuit de commande est constitué par un seul circuit imprimé rigide coulissant dans le corps:

— dont une extrémité reçoit la tête de lecture en contact avec les pistes du circuit de commande supportées par le circuit imprimé rigide:

— et dont l'autre extrémité située à l'intérieur du corps comporte un interrupteur élastique destiné à fermer WO 83/02 842 divulgue un dispositif détecteur autonome, qui comprend un circuit imprimé rigide coulissant dans le corps du dispositif et portant une partie d'un interrupteur, l'autre partie étant portée par un deuxième circuit imprimé. Ce dispositif connu n'évalue pas la résistance électrique des zones d'un support. Le circuit de commande lorsque la tête est appuyée sur une zone du support, par appui sur le fond du corps.

La manière dont l'invention peut être réalisée et les avantages qui en découlent ressortiront mieux de l'exemple de réalisation qui suit, donné à titre indicatif et non limitatif, à l'appui des figures annexées.

La figure 1 est une représentation en coupe longitudinale d'un dispositif détecteur autonome conforme à l'invention.

La figure 2 est une vue perspective sommaire de la tête de lecture caractéristique de l'invention.

La figure 3 est un schéma électronique de montage de ce dispositif détecteur autonome pour application sonore.

La figure 4 est une représentation d'un support destiné à coopérer avec ce dispositif détecteur.

La figure 5 est un autre schéma életronique du détecteur autonome pour application sonore.

La figure 6 est un schéma életronique du détecteur autonome pour application lumineuse.

La figure 7 est une représentation schématique de l'interrupteur élastique préféré du circuit életronique dans le cas de l'application sonore.

Enfin la figure 8 est une représentation schématique de l'interrupteur élastique préféré du circuit dans le cas de l'application lumineuse.

Le dispositif détecteur caractéristique de l'invention comprend essentiellement un corps (1) allongé, notamment en matière plastique, destiné à recevoir un circuit imprimé rigide (2) dont une extrémité effilée (3) reçoit la tête de lecture (4) qui dépasse de cette extrémité (3).

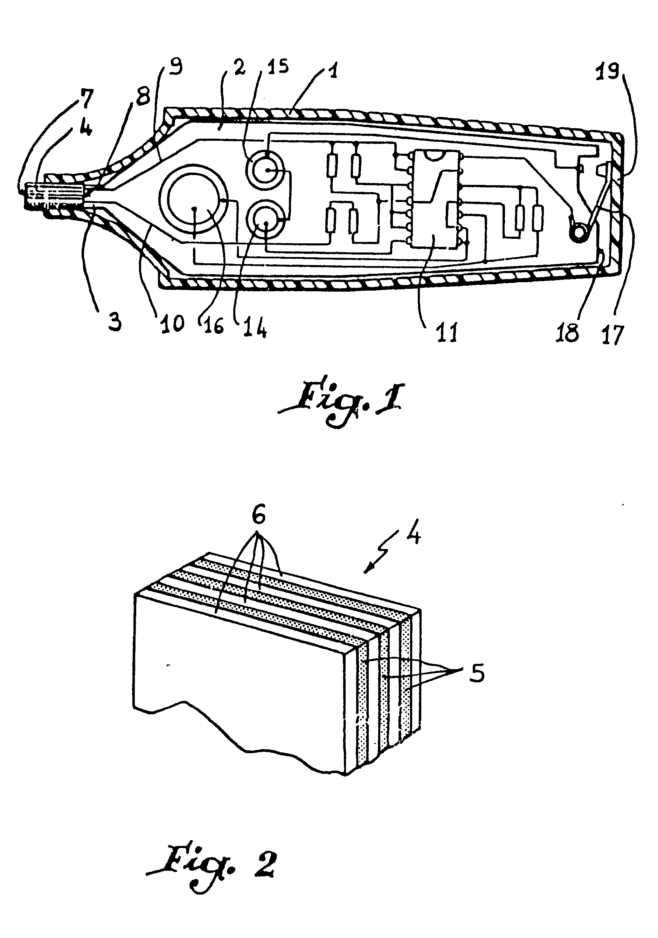

Selon une caractéristique importante de l'invention, la tête de lecture (4) est constituée (voir figure 2) par un empilement de feuilles parallèles accolées les unes aux autres respectivement conductrices (5) et isolantes (6). Ces feuilles sont avantageusement an matière plastique telle que élastomère et plus précisément silicone. Le pas entre deux feuilles parallèles de même nature est voisin de 0,2 mm.

Selon l'application, la pointe (4) peut être plus ou moins glissante.

Le raccordement entre l'extrémité du circuit imprimé rigide (2) et la tête de lecture (4) s'effectue avantageusement par l'intermédiaire d'une pièce d'assemblage en matière plastique.

L'extrémité avant (7) de cette tête de lecture (4) est destinée à venir au contact des repères d'identification (21, 22, 23) du support, alors que l'extrémité arrière ou encore mieux latérale (8) est destinée à venir au contact des pistes (9) et (10) du circuit imprimé (2).

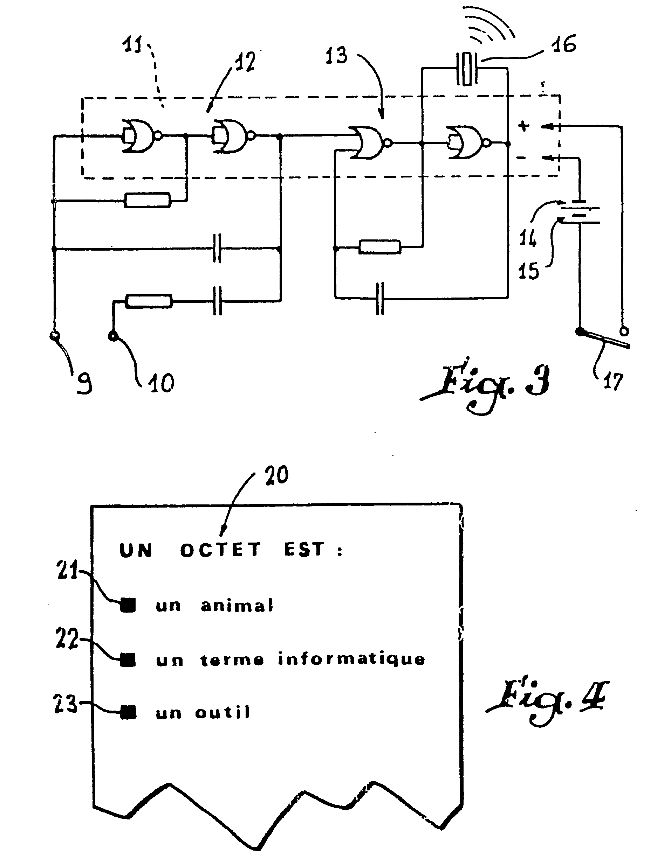

Ce circuit imprimé (2) (voir figure 3) rigide comporte essentiellement:

— une électronique de détection (11) constituée par deux séries (12) et (13) de portes logiques en technologie CMOS, connectée en montage oscillant, à savoir dans l'ordre pour (12) deux portes inverseuses en série et pour (13) une porte avec entrée de blocage en série avec une porte inverseuse; en d'autres termes, la série de portes (13) est modulée par la fréquence émise par la série de portes (12);

— deux piles d'alimentation électrique (14, 15), par exemple de 1,5 volts,

— un vibreur sonore (16) constitué d'un transducteur piezoélectrique, connecté sur la deuxième série (13) de portes logiques,

— un interrupteur (17) placé à l'extrémité interne (18) du circuit imprimé (2), constitué par une lame élastique soudée (17) sur ce circuit imprimé (2), destiné à alimenter le circuit (11) de commande.

Comme on le voit sur la figure 4, le support constitué par exemple par une feuille de papier de grammage courant, comporte une série d'informations (20) associées à des zones (21, 22, 23) correspondant à un choix de réponse. De manière connue, ces zones (21, 22, 23) ont le même aspect visuel mais sont imprimés avec des encres différentes, respectivement:

— avec une encre conductrice pour obtenir la zone correspondant à la réponse exacte (22),

— avec une encre isolante ou nettement moins conductrice pour les zones correspondant aux réponses éronnées (21) et (23).

Les zones conductrices peuvent être soit continues, soit formées d'une pluralité de points tramés juxtaposés, soit formées de barres parallèles.

Dans une variante, les zones d'identification peuvent être constitués par les réponses elles-mêmes.

Lorsque la face avant (7) de la tête de lecture (4) vient en appui sur une zone de réponse éronnée (21) ou (23), sous l'effet de la pression ainsi exercée, le circuit (2) coulisse dans le corps (1) jusqu'à ce que la lame élastique (17) de l'interrupteur interne vienne en appui sur le fond (19) du corps (1) et ferme ainsi le circuit de commande (11).

En revanche, si la zone en question (22) correspond à la réponse exacte, les bornes des pistes (9) et (10) sont alors reliées par une résistance. Cela a pour effet d'augmenter la constante de temps RC de la première série (12) de porte logique de telle sorte que celle-ci génère une première fréquence, par exemple de l'ordre de quelques hertz. Le mélange de cette première fréquence avec celle générée par la deuxième série de porte logique (13) donne un son aigu pulsé sur le vibreur sonore (16) identifiant une bonne réponse.

Comme la technologie mise en oeuvre fait appel à des portes (12, 13) CMOS, l'installation ne consomme quasiment pas de courant, de sorte qu'une résistance parasite entre les bornes (9) et (10) ne perturbe pratiquement pas de manière significative le fonctionnement du détecteur.

En revanche, si la zone (21) ou (23) est isolant, la valeur RC de la première série de porte logique (12) est plus faible, ce qui donne alors une fréquence plus élevée. La combinaison de cette fréquence aigue avec celle générée par la seconde série (13) donne un son grave désagréable, car il n'est pas pur. On identifie ainsi de la sorte une réponse éronnée.

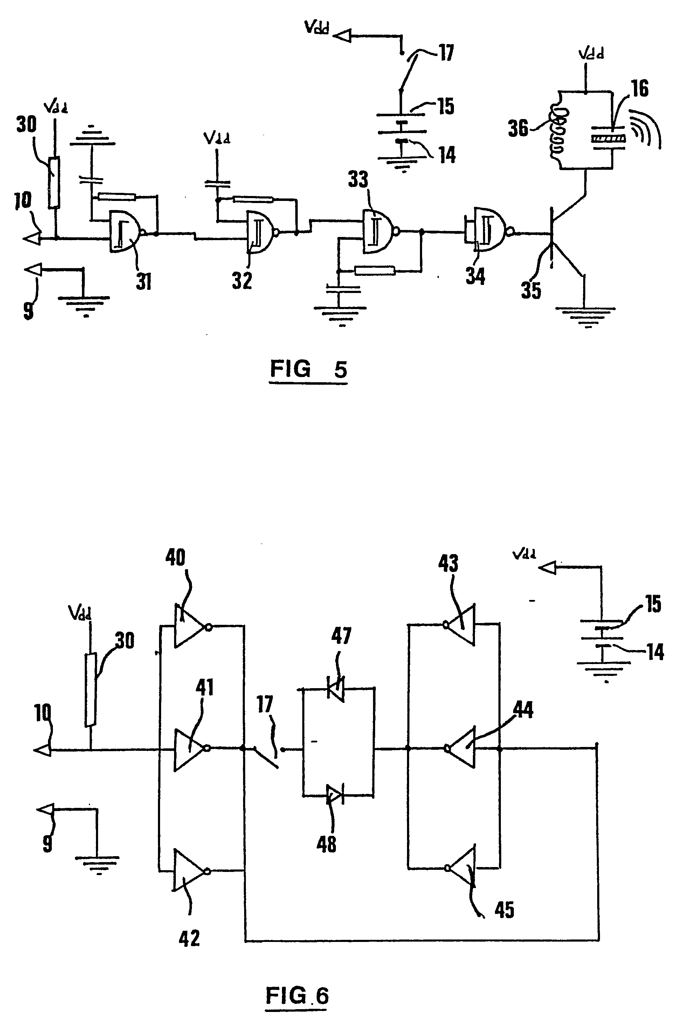

Dans une variante, le circuit électronique de détection (2) (voir figure 5) comprend à partir de ses deux bornes d'entrée (9, 10) une résistance (30) reliée à la borne positive. L'électronique de détection (11) proprement dite comprend une série de quatre portes logiques C-MOS, respectivement (31-34) oscillantes, qui génère chacune une fréquence différente, destinées à exciter un transducteur piezoélectrique faisant office de vibreur sonore (16). Elle comprend en outre un transistor (35), couplé avec un solénoïde (36), et destiné à amplifier le signal émis par le transducteur (16).

Ce circuit, de par la présence à son entrée de la résistance (30), permet d'augmenter la fiabilité du dispositif électronique en définissant un seuil ajustable de basculement du système entre les deux résistances en référence, à savoir la résistance (30) et la résistance matérialisée par la fermeture du circuit externe [c'est à dire du circuit électrique sur lequel on appuie avec la tête de lecture (4).]

Avantageusement, le corps tubulaire (1) est percé au voisinage du transducteur (16), disposé dans cette forme de réalisation vers l'extrémité opposée à la tête de lecture (4).

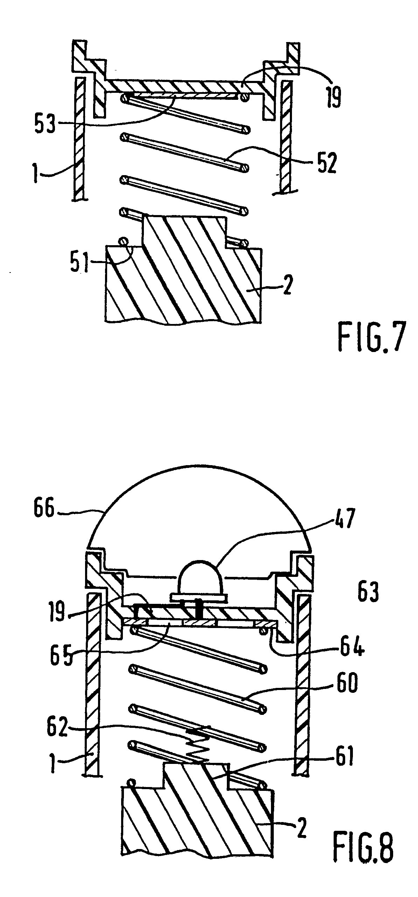

Dans une autre variante, le système interrupteur (17) (voir figure 7) comprend une pièce conductrice (50) soudée à l'extrémité du circuit (2) qui définit un épaulement (51) par rapport au circuit rigide (2), sur lequel vient s'appuyer un ressort spiralé (52). L'extrémité interne du fond (19) du corps (1) est également en matière conductrice (53).

Sous l'action d'une pression exercée sur la tête de lecture (4), on comprime le ressort (52) jusqu'à établir le contact entre la pièce conductrice (50) et la partie conductrice (53) du fond (19). Dès que la pression se relache, le dit ressort supprime le contact.

Dans une autre forme de réalisation, le vibreur sonore peut être remplacé par une jeu de diodes électroluminescentes (DEL) de couleurs appropriées. Dans ce cas, le circuit électrique de détection est modifié (voir figure 6). Le seuil de basculement est comme dans le cas précédent avantageusement ajustable en fonction du choix de la résistance d'entrée (30), connectée avec la borne positive du circuit. L'ensemble électronique de détection comporte six portes logiques inverseuses du type C-MOS (40-45), réparties en deux groupes, l'un commandant électriquement l'autre, et entre lesquels sont intercalés deux DEL (46, 47) de couleurs différentes montées tête-bêche. Le circuit est alimenté au moyen de deux piles (14, 15) de 1,5 Volts chacune.

L'utilisation de DEL à la place d'un vibreur sonore suppose une modification de l'interrupteur élastique (17), afin de permettre la visualisation du signal lumineux à l'extrémité du corps (1) opposée à la tête de lecture (4).

Comme on peut le voir au sein de la figure 8, l'interrupteur (17) comporte un ressort spiralé (60), soudé à l'extrémité du circuit rigide (2) et s'appuyant sur un épaulement matérialisé sur le circuit (2) par une pièce conductrice (61) fixée sur le dit circuit. Un second ressort spitalé (62), coaxial avec le ressort (60) et fixé sur la pièce conductrice (61) coopère, lorsque l'on exerce une pression sur la tête de lecture (4), avec une surface conductrice (63) ménagée sur la face interne du fond (19) du corps (1).

La surface conductrice (63) est séparée d'une seconde surface conductrice (64), annulaire et coplanaire avec la surface (63), par une zone annulaire isolante (65). La surface (64) est destinée à coopérer de façon permanente avec le ressort (60). Les DEL (46, 47) sont situées au dessus de ces surfaces (63, 64), chacune de leurs deux bornes étant respectivement connectée aux zones (63) et (64). Avantageusement, les DEL sont protégées par un dôme (66) en matière plastique transparente.

Le dispositif détecteur conforme à l'invention se caractérise essentiellement:

— par sa simplicité et son coût réduit,

— sa facilité de mise en oeuvre,

— l'absence de connection électrique mobile par rapport au corps, ce qui en améliore considérablement la fiabilité,

— la présence de connections et de contacts électriques plus ou moins résistifs, sans que cela nuise à la qualité du signal émis;

— la possibilité d'imprimer les supports par des techniques classiques d'imprimerie en impression, par exemple par tramage.

De la sorte, ce dispositif détecteur autonome peut être utilisé avec succès dans des applications très variées, ludiques, pédagogiques ou de diagnostic. Il peut être également utilisé comme lecteur dans un système code-barres, en lieu et place de la tête actuelle de lecture optique classique.

## Revendications

1. Dispositif détecteur autonome, destiné à coopérer avec des zones conductrices (22) ou isolantes (21, 23) d'un support comprenant:
   — un corps (1) allongé,
   — une tête de lecture (4) dépassant de ce corps (1)
   — un circuit de commande (2) associé à la tête de lecture (4), apte à émettre un signal en fonction de la résistance électrique de la zone (21, 22, 23) sur lequel est appliquée cette tête de lecture (4),
   — une source d'alimentation électrique (14, 15), caractérisé en ce que le circuit de commande (2) est constitué par un seul circuit imprimé rigide (2) coulissant dans le corps (1):
   — dont une extrémité (3) reçoit la tête (4) de lecture en contact avec les pistes (9) et (10) du circuit de commande supporté par le circuit imprimé rigide (2);
   — et dont l'autre extrémité (18) située à l'intérieur du corps (1) comporte un interrupteur élastique (17) destiné à alimenter le circuit de commande (11) lorsque la tête (4) est appuyée en (7) sur une zone (21, 22, 23) du support, de sorte que ledit interrupteur (17) est en appui sur le fond (19) du corps (1).

2. Détecteur selon la revendication 1, caractérisé en ce que la tête de lecture (4) est formée par un empilement de feuilles parallèles accolées conductrices (5) et isolantes (6) en élastomère.

3. Détecteur selon la revendication 1, caractérisé en ce que le circuit de commande (2) comporte:
   — une électronique de détection (11) constituée par deux séries (12, 13) de portes logiques en technologie C-MOS connectées en montage oscillant,
   — et un vibreur sonore (16) connecté sur la deuxième serie (13) de portes logiques.

4. Détecteur selon la revendication 3, caractérisé en ce que le circuit électronique de commande (2) comporte:
   — un vibreur sonore (16)
   — une électronique de détection (11) constituée d'au moins trois portes logiques CMOS (31, 32, 33) connectées en série en montage oscillant, commandant le vibreur (16) par le biais d'un transistor (35) et d'un solénoïde (36),
   — une résistance (30) disposée entre la borne positive (10) et l'interrupteur (17).

5. Détecteur selon la revendication 1, caractérisé en ce que le circuit de commande comprend un circuit électronique de détection constitué d'au moins deux séries de portes logiques (40-45), montées en séries, entre lesquelles sont intercallés l'interrupteur (17) et des DEL (47, 48) de couleurs différentes, montées tête-bêche.

6. Détecteur selon les revendications 1 et 5, caractérisé en ce que l'interrupteur élastique (17) est constitué par un ressort spiralé (52, 60) soudé à l'extrémité d'un épaulement (51), prévu à cet effet à l'extrémité du circuit rigide imprimé (2) qui coopère avec au plus un second ressort spiralé (62), coaxial au ressort (52, 60), et qui prend appui sur une surface conductrice (53, 63) disposée à l'intérieur du fond (19) du corps (1).

## Patentansprüche

1. Autonomes Erkennungselement zum Wechselwirken mit leitfähigen (22) oder isolierenden (21, 23) Bereichen einer Oberfläche, mit
   — einem länglichen Körper (1),
   — einem über den Körper (1) überstehenden Lesekopf (4),
   — einem dem Lesekopf (4) zugeordneten Steuerkreis (2) zum Aussenden eines Signals in Abhängigkeit vom elektrischen Widerstand des Bereiches (21, 22, 23), auf den der Lesekopf (4) aufgesetzt wird,
   — einer elektrischen Versorgungsquelle (14, 15), dadurch gekennzeichnet, daß der Steuerkreis (2) durch eine einzige starre gedruckte Schaltung (2) gebildet wird, die im Körper (1) gleitet:
   –- deren eines Ende (3) den Lesekopf (4) aufnimmt, der sich in Kontakt mit den Leiterbahnen (9) und (10) des von der starren gedruckten Schaltung (2) getragenen Steuerkreises befindet;
   — und dessen anderes, im Inneren des Körpers (1) befindliches Ende einen elastischen Unterbrecher (17) umfaßt, der den Steuerkreis (11) versorgt, wenn der Kopf (4) bei (7) auf einen Bereich (21, 22, 23) der Oberfläche aufgesetzt wird, derart, daß der Unterbrecher (17) an dem Boden (19) des Körpers (1) anliegt.

2. Erkennungselement nach Anspruch 1, dadurch gekennzeichnet, daß der Lesekopf (4) durch einen Stapel von zueinander parallelen und miteinander verbundenen leitfähigen (5) bzw. aus einem Elastomer bestehenden, isolierenden (6) Schichten gebildet wird.

3. Erkennungselement nach Anspruch 1, dadurch gekennzeichnet, daß der Steuerkreis (2) umfaßt:
   — eine Erkennungselektronik (11), bestehend aus zwei Reihen (12, 13) logischer C-MOS Gatter, die zu einer Oszillatorschaltung verbunden sind,
   — einem an die zweite Reihe (13) logischer Gatter angeschlossenen akustischen Schwinger (16).

4. Erkennungselement nach Anspruch 3, dadurch gekennzeichnet, daß der elektronische Steuerkreis (2) umfaßt:
   — einen akustischen Schwinger (16),
   — eine Erkennungselektronik (11), bestehend aus mindestens drei logischen C-MOS Gattern (31, 32, 33), die in Reihe miteinander zu einer Oszillatorschaltung verschaltet sind und den Schwinger (16) über eine geneigte Kennlinie eines Transistors (35) und eine Spule (36) steuert,

— einen Widerstand (30), der zwischen die positive Betriebsspannung (10) und den Unterbrecher (17) geschaltet ist.

5. Erkennungselement nach Anspruch 1, dadurch gekennzeichnet, daß der Steuerkreis einen elektronischen Erkennungskreis umfaßt, der durch mindestens zwei Reihen von logischen Gattern (40 bis 45) gebildet wird, die in Reihe geschaltet sind, wobei zwischen denselben der Unterbrecher (17) sowie antiparallel geschaltete Leuchtdioden (47, 48) unterschiedlicher Farbe geschaltet sind.

6. Erkennungselement nach Anspruch 1 und 5, dadurch gekennzeichnet, daß der elastische Unterbrecher (17) durch eine Schraubenfeder (52, 60) gebildet wird, die auf ein Ende einer Schulter (51) gelötet ist, welche zu diesem Zweck an einem Ende der starren gedruckten Schaltung (2) vorgesehen ist, wobei letztere ferner mit einer zweiten Schraubenfeder (62) zusammenwirkt, die koaxial zur Feder (52, 60) angeordnet ist und sich auf einer leitfähigen Oberfläche (53, 63) abstützt, die im Inneren des Bodens (19) des Körpers (1) angeordnet ist.

## Claims

1. Self-contained detector device, adapted to cooperate with conducting (22) or non-conducting zones (21, 23) of a carrier comprising:
— an elongated body (1),
— a reading head (4) projecting from said body (1),
— a control circuit (2) operationally coupled to the reading head (4) capable of delivering a signal as a function of the electrical resistivity of the zone (21, 22, 23) on which the reading head (4) is applied,
— a source of electrical power (14, 15), characterized in that the control circuit (2) is constituted by only one rigid printed circuit (2) slidable inside the body (1):

— of which one end (3) receives the reading head (4) in contact with the tracks (9, 10) of the control circuit, which tracks are supported by the rigid printed circuit (2),
— the other end (18), situated inside the body (1), comprising a spring switch (17) designed to close the circuit (11) when the head (4) presses against a zone (21, 22, 23) of the carrier, by resting on the bottom (19) of the body (1).

2. Detector as claimed in claim 1, wherein the reading head (4) is formed by a stracking of parallel side by side conducting (5) and non-conducting (6) sheets of elastomer.

3. Detector as claimed in claim 1, wherein the control circuit (2) comprises:
— an electronic detector system (11) constituted by two series (12, 13) of logic gates in CMOS technology connected in oscillating assembly, and;
— a buzzer (16) connected on the second series (13) of logic gates.

4. Detector as claimed in claim 3, wherein the electronic control circuit (2) comprises:
— a buzzer (16),
— an electronic detection system (11) constituted of at least three series-mounted CMOS logic gates (31, 32, 33), in oscillating assembly, controlling the buzzer (16) via a transistor (35) and a coil (36),
— a resistor (30) placed between the positive terminal (10) and the switch (17).

5. Detector as claimed in claim 1, wherein the control circuit comprises an electronic detection circuit constituted of at least two series of logic gates (40-45), mounted in series, and between which are inserted the switch (17) and LED's (47, 48) of different colors, mounted in head-to-foot fashion.

6. Detector as claimed in claim 1, wherein the spring switch (17) is constituted by a coil spring (52, 60) welded on the end of a shoulder (51) provided to this effect on the end of the rigid printed circuit (2) which cooperates with at the most a second coil spring (62), co-axial to the first (52, 60), and which rests on a conducting surface (53, 63) placed inside the bottom (19) of the body (1).

**Fig. 1**

**Fig. 2**

Fig. 3

UN  OCTET  EST :

■ un  animal

■ un  terme  informatique

■ un  outil

Fig. 4

**FIG 5**

**FIG.6**

FIG.7

FIG.8